# EUROPEAN PATENT APPLICATION

(11) **EP 1 418 364 A1**
(43) Date of publication of application: **12.05.2004**
(21) Application number: 03445122.9
(22) Date of filing: 27.10.2003
(51) Int. Cl.: F16F 9/46

(54) **Electronically controlled active suspension damper**

(30) Priority: 08.11.2002 US 290946
(71) Applicant: Arctic Cat Inc., Thief River Falls, Minnesota 56701 (US)
(72) Inventor: Braswell, Douglas K., Red Lake Falls, Minnesota (US)
(74) Representative: Larsson, Lena Eva-Karin

(57) **Abstract**

A suspension control system that is useful with a snowmobile, ATV, and other recreational vehicles, comprising: a main body (34) defining a shock absorber, a piston disposed within the shock absorber, a remote reservoir (40), a control valve housing (54), a control valve (56), a GMR sensor (57), and a microprocessor (57). The piston is located in the shock body and is movable between a first piston position and a second piston position under the force of a load acting on the piston. The opposite ends of the fluid chamber are coupled by a channel in fluid communication, the channel permitting fluid to flow from one side of the shock piston to the other. The control valve (56) is operable to control the flow of the fluid through the channel, the valve (56) being movable from an open position, where fluid movement through the channel is permitted, to a closed position wherein the flow of fluid through the channel is blocked.

## Description

### Field of the Invention

This invention relates generally to suspension dampers for vehicles such as snowmobiles or all-terrain vehicles (ATV's), and more particularly to a suspension system that provides a controlled cushioned ride.

### Background of the Invention

Vehicles such as snowmobiles and ATV's are prone to shock and vibration due to varying speed and terrain. A variety of suspension systems have been employed on snowmobiles over the years to compensate for the ruggedness of the terrain. A conventional suspension system for a snowmobile includes a number of shock absorbers, and associated springs for supporting the frame of the snowmobile. Such suspension systems usually are not automatically adjustable. Accordingly, persons of different weights or multiple passengers riding on the same vehicle could result in changes in ride or handling characteristics.

Although conventional snowmobile suspension systems are unable to automatically adjust on a real time basis, some suspension systems do allow for manual adjustment. In these cases, riders must stop the snowmobile, turn off the engine for safety, and manually adjust the stiffness or tension provided by the shock absorbers of the snowmobile. But adjusting the conventional suspension system on snowmobiles is typically a compromise between varying conditions. For example, if the suspension system is set too hard, the shock performs poorly in trail chatter. If the system is set too soft, the shock may waste energy and bottom out on high speed impacts.

Accordingly a system capable of continuously adjusting the vehicle's suspension to optimize performance across various speeds and terrains would be desirable.

### Summary of the Invention

The present invention relates to suspension systems to increase rider comfort on a tracked vehicle. Generally, the present invention relates to a shock absorber for snowmobiles that senses both velocity and position for controlling ride characteristics. More specifically, the invention uses giant magnetoresistive (GMR) control technology to automatically adjust the vehicles suspension to optimize performance across various speeds and terrains. The shock controls the suspension in the closed position and allows for free flow of the shock's fluid in the open position. Free flow allows for no damping of the vehicles suspension, which minimizes the shock resulting from an uneven trail surface.

The GMR senses the position and velocity of the shock rod. The microprocessor receives the information from the GMR sensor and in turn tells the control valve what to do. The actuator in the control valve receives the control signal and adjusts to regulate the fluid flow through a bypass orifice, which in turn regulates the shock damping. When the shock piston is moving rapidly due to high speed hits, large damping forces are generally desired. Conversely, when the shock piston is moving more slowly, smaller damping forces are desired.

In one embodiment, an electronic controller and power supply, along with a giant magnetoresistive (GMR) sensor, controls the open or close condition of a bypass valve based on shock rod and piston position and velocity. Accordingly, the shock's main control piston controls the suspension action. Free flow of the shocks fluid through the control valve allows for damping of the vehicle's suspension. In one embodiment of this invention, the valve housing, remote reservoir and main body are incorporated into one casting, eliminating the need for dozens of parts and valve assembly.

A GMR sensor in the shock reads the piston speed and position, and sends data back to a microprocessor. The circuit sends a signal to the control valve, allowing it to open and close in a time as short as milliseconds. The control valve regulates the flow of fluid through the bypass ports, which adjusts the shock damping. The end result is a smoother ride and increased track to ground contact and ski control, providing the user with increased control over changing terrain.

The sensor system includes a magnet and sensor that work in conjunction with the bypass valve. The sensor is based on the giant magnetoresistive (GMR) effect, which detects the "flux density" of the magnetic field and converts it to a voltage signal. This voltage can indicate the speed and position of the shock piston with extreme precision. Sensor information is then relayed to an electronic control circuit, where a microprocessor uses a control algorithm to translate the voltage to command signals for the control valve.

The above summary of the present invention is not intended to describe each disclosed embodiment or every implementation of the present invention. The figures and the detailed description that follows more particularly exemplify these embodiments.

### Brief Description of the Drawings

The invention may be more completely understood in consideration of the following detailed description of various embodiments of the invention in connection with the accompanying drawings, wherein like numerals represent like parts throughout several views, in which:
FIG. 1 is a side elevational view of a snowmobile with some parts cut away and other parts removed, incorporating the shock absorber of the present invention;
FIG. 2 is an isometric view of the shock absorber of the present invention;
FIG. 3 is a reverse isometric view of the shock absorber of the present invention;
FIG. 4 is an isometric view of an alternative embodiment of the shock absorber of the present invention;
FIG. 5 is a reverse isometric view of an alternative embodiment of the shock absorber of the present invention;;
FIG. 6 is a side view of the shock absorber of the present invention;
FIG. 7 is a cross sectional view of the shock absorber taken along line A-A of FIG. 6.
FIG. 8 is a side view of an alternative embodiment of the shock absorber of the present invention;
FIG. 9 is a top view of an alternative embodiment of the shock absorber of the present invention;
FIG. 10 is a cross sectional view of an alternative embodiment of the shock absorber taken along line B-B of FIG. 9.
FIG. 11 is an end view of the shock absorber of the present invention.
FIG. 12 is a cross sectional view of the shock absorber housing taken along line C-C of FIG. 11.
FIG. 13 is an isometric view of the shock absorber housing of the present invention.
FIG. 14 is an end view of the shock absorber housing of the present invention.
FIG. 15 is a cross sectional view of the shock absorber housing taken along line D-D of FIG. 14.
FIG. 16 is a reverse isometric view of the shock absorber housing of the present invention.
FIG. 17 is an isometric view of the shock absorber housing of the present invention.
FIG. 18 is a reverse side view of the shock absorber housing of the present invention.
FIG. 19 is a cross sectional view of the shock absorber housing taken along line F-F of FIG. 18.
FIG. 20 is a side view of an alternative embodiment of the shock absorber housing of the present invention.
FIG. 21 is a cross sectional view of an alternative embodiment of the shock absorber housing taken along line G-G of FIG. 20.
FIG. 22 is a bottom end view of an alternative embodiment of the shock absorber housing of the present invention.
FIG. 23 is a cross sectional view of an alternative embodiment of the shock absorber housing taken along line H-H of FIG. 22.

While the invention is amenable to various modifications in alternative forms, the specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention.

### Detailed Description of the Preferred Embodiment

The present invention is believed to be applicable to suspension systems to increase rider comfort on a tracked vehicle or ATV. The electronically controlled active suspension damper of the present invention is particularly advantageous with snowmobiles and ATV's because a variety of shock-producing surfaces are encountered while riding these vehicles. Generally, low amplitude bumps occur at high frequency while high amplitude bumps occur at a much lower frequency because the size of the bump indicates that the bumps must be spaced farther apart. Large snow drifts are examples of high amplitude, low frequency bumps. A frozen lake with a surface that has frozen unevenly due to high winds is an example of terrain with low amplitude, high frequency bumps. The electronically controlled active suspension damper of the present invention is designed to provide increased rider control in different types of terrain.

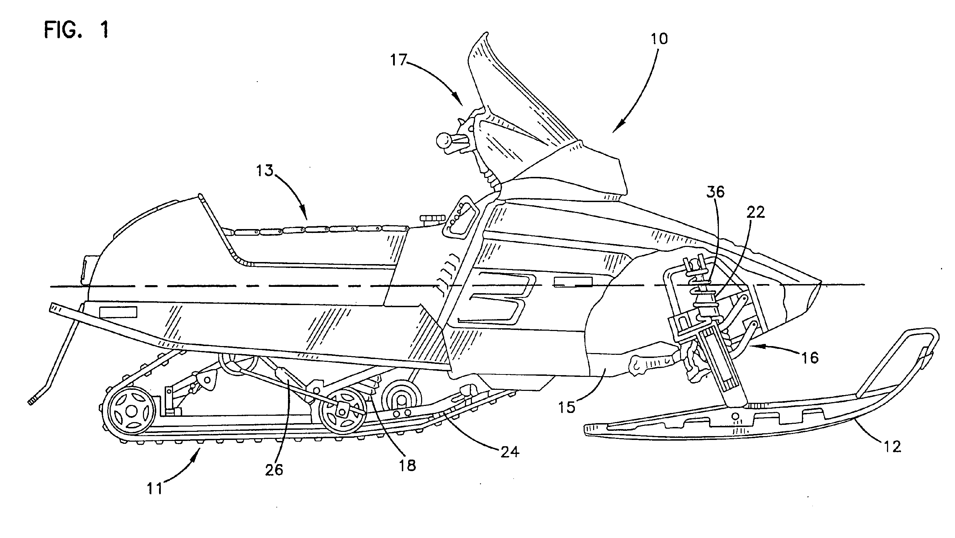

FIG. 1 depicts a snowmobile with the electronically controlled active suspension damper of the present invention. Snowmobile 10 includes a traction unit 11, a seat area 13, a chassis 15, a steering arrangement 17, a pair of skis 12 (only one shown), a front suspension 16, and a rear suspension 18. Front suspension 16 is fastened to the chassis 15. A shock absorber 22 is disposed between front suspension 16 and chassis 15 to provide front suspension action. The shock absorber 22 provides both shock absorption and damping, as is described in detail below. Front suspension 16 may have many alternative configurations, or other linkage mechanisms. The same damping concepts discussed herein can be applied to these other configurations.

Rear suspension 18 is pivotally attached to chassis 15 near traction unit 11. Rear shock absorber 26 is also attached at one end to chassis 15. When rear suspension 18 encounters a force, rear shock absorber 26 is compressed such that the track 24 is allowed to move relative to the chassis 15 to dampen shock. Alternative rear suspension systems can be employed with rear shock absorber 26. An example of such a rear suspension system is found in U.S. Patent 5,664,649, incorporated herein by reference. The same damping concepts discussed herein can also be applied to these other configurations and other devices like ATV's, for example.

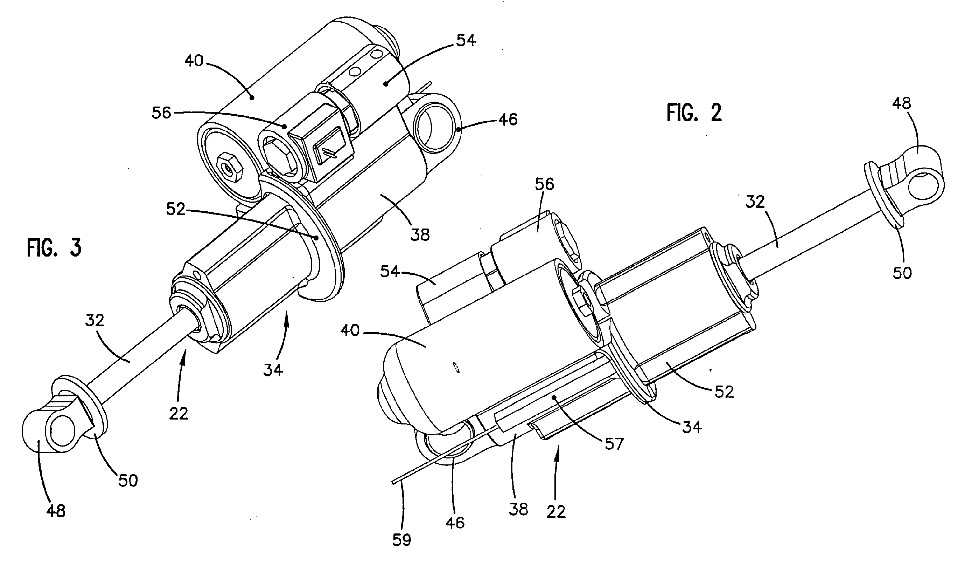

Referring now to FIGS. 2, 3, 6, and 11, the details of shock absorber 22 will now be discussed. Note that while shock absorber 22 refers to the shock absorber used with the front suspension 16 of the snowmobile illustrated in FIG. 1, the same or similar shock absorber can be utilized on the rear suspension 18. Shock absorber 22 includes a rod 32 extending into a main body 34. In some embodiments, a spring 36 (shown on FIG. 1) may extend along rod 32 and over a portion of the main body 34. Spring 36 absorbs shock and provides rebound while rod 32 extends into main body 34 and provides damping as explained below.

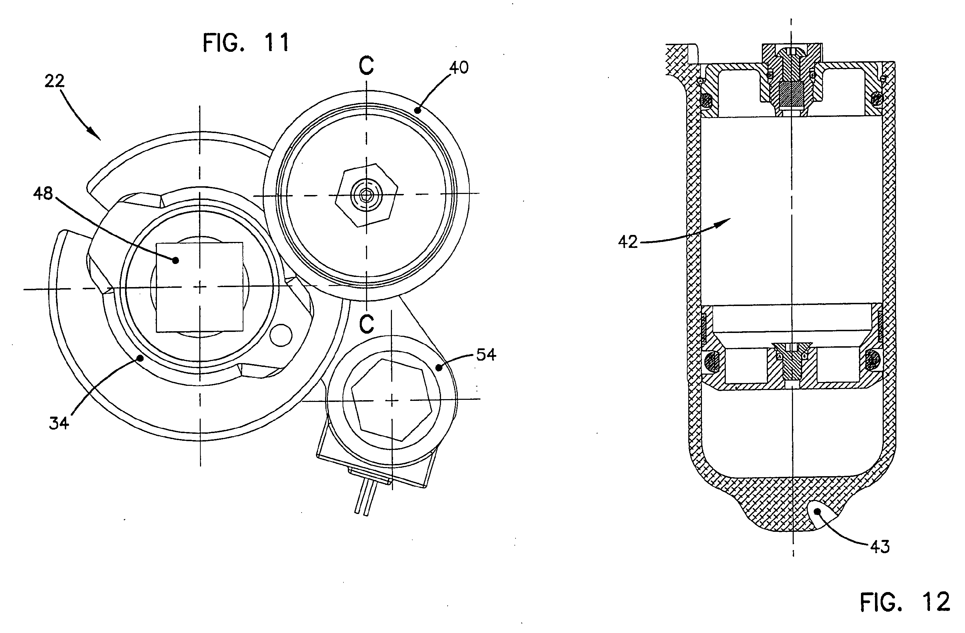

Main body 34 encloses fluid reservoir 38. Remote reservoir 40 may be contained in the same general casting as main body 34 but it is located outside fluid reservoir 38. Remote reservoir 40 contains fluid chamber 42, and channel 43, shown in FIG. 12. Fluid chamber 42 and remote reservoir 40 are interconnected by channel 43 that enables fluid to flow between fluid chamber 42 and remote reservoir 40. Alternatively, fluid may move from the fluid reservoir 38 to the fluid chamber 42 through hoses connected to fittings in the housing.

The end of the main body 34 opposite the rod 32 contains a housing end mount 46 for mounting the end of the shock absorber 22 either to the snowmobile chassis 15 or the front suspension 16. A rod end mount 48 is provided on the opposite side of the shock absorber 22. In FIG. 1, the rod end mount 48 is mounted to the chassis while the housing end mount 46 is secured to the front suspension 16.

Spring 36 may generally be held on rod 32 and main body 34 with spring stop 50 secured to rod 32 near the end of rod end mount 48 and preload ring 52 at the opposite end of spring 36. In alternative embodiments, preload ring 52 is threadably engaged on main body 34. Therefore, by turning preload ring 52, the preload in spring 36 may be adjusted.

A valve housing 54 is also provided on shock absorber 22. Valve housing 54 may be contained in the same general casting as main body 34. Valve housing 54 holds the control valve 56. The control valve 56 preferably comprises a solenoid capable of actuating from the open to closed position.

Microprocessor/GMR sensor controller unit 57 is located on the side of fluid reservoir 38. Microprocessor/GMR sensor controller unit 57 contains a GMR sensor, which is capable of sensing the velocity and position of the rod 32. The GMR sensor sends a signal to a microprocessor, which processes the information from the GMR sensor and actuates the control valve 56. The microprocessor may also be located in the sensor controller unit 57. Power wire 59 provides electric current to the components in the microprocessor/GMR sensor controller unit 57.

Referring to FIG's. 6 and 7, fluid reservoir 38 includes an opening at one end through which rod 32 is inserted. A reservoir cap 63 may extend around the rod 32 and be held tightly within the open end of the main body 34 to create an enclosed fluid reservoir 38. A reservoir seal 65 is also included on the outside of reservoir cap 63. Reservoir cap 63, valves, and rod seal 67 reduce the chances of hydraulic fluid escaping from fluid reservoir 38. O-rings may generally be employed at appropriate locations to ensure adequate sealing. In alternative embodiments, reservoir cap 63 will abut a bottom out bumper 69 held on rod 32 adjacent the spring stop 50 when rod 32 extends all the way into hydraulic reservoir 38.

Piston assembly 64 is located on rod 32 opposite rod end mount 48. Piston assembly 64 includes compression ports that allow fluid to pass from one side of piston assembly 64, through piston assembly 64, to the other side of piston assembly 64 as rod 32 moves toward end mount 46. Piston assembly 64 also includes rebound ports that allow fluid to pass through piston assembly 64 as rod 32 moves away from end mount 46. The compression ports and rebound ports generally have a very small diameter, which prevent piston assembly 64 from moving rapidly inside fluid reservoir 38, thereby resulting in a relatively stiff suspension. For this reason, bypass channel 44 is provided, which enables fluid to quickly move from one side of piston assembly 64 to the other side of piston assembly 64 when control valve 56 is in the open position.

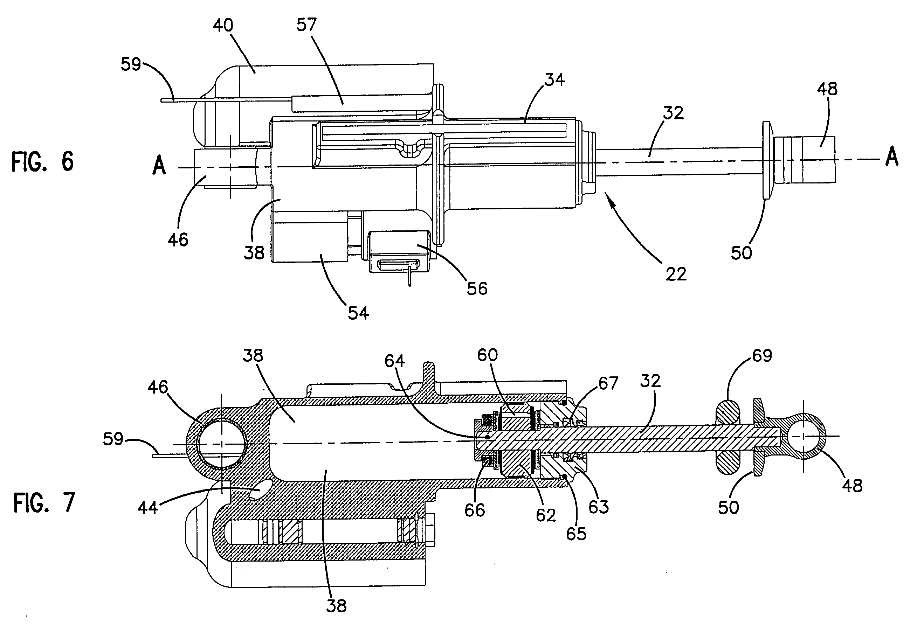

A GMR sensor is provided to detect both the displacement and velocity of the piston assembly 64 relative to the main body 34. The sensor and control arrangement preferably employed in the present invention includes a magnet 66 secured on the end of the piston assembly 64, as shown in FIG. 7. The sensor may be secured in the sensor controller unit 57. The sensor is preferably connected to a circuit board comprised of a microprocessor chip that includes the microprocessor logic to manipulate the control valve 56 based on the signal from the sensor. As the rod 32 moves in response to changing terrain, the magnet 66 moves past the GMR sensor located in the control unit 57. The GMR sensor detects the velocity and position of the magnet 66, which corresponds to the velocity and position of the rod 32. The microprocessor interprets the information from the sensor, which manipulates the control valve 56.

When the control valve 56 is in an open position, fluid is allowed to freely move through channel 44 and between the fluid reservoir 38 and the remote reservoir 40. Alternatively, when the control valve 56 is in a closed position, the fluid cannot freely move between the fluid reservoir 38 and the remote reservoir 40. The suspension will be much stiffer because the fluid must move through the relatively small compression or rebound ports on piston assembly 64, rather than channel 44.

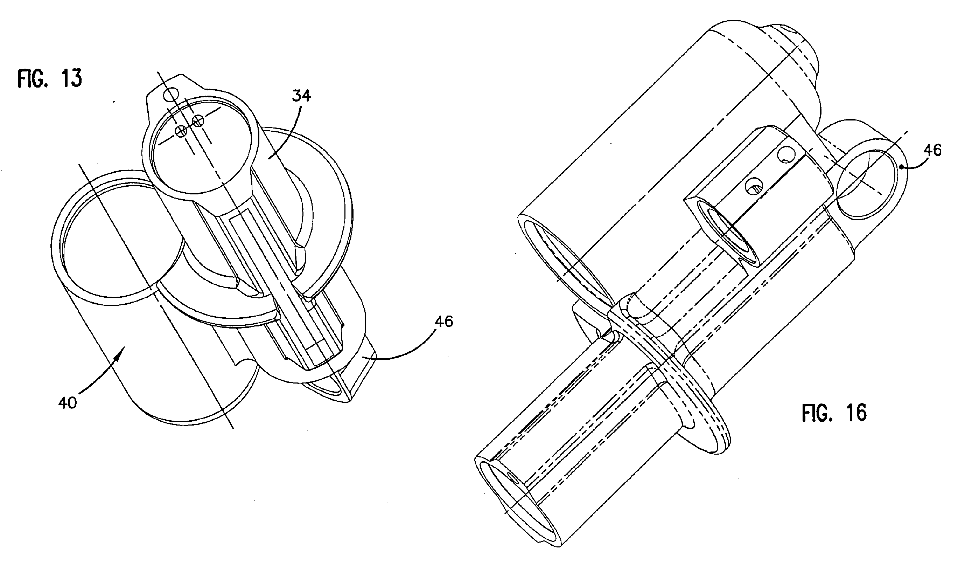

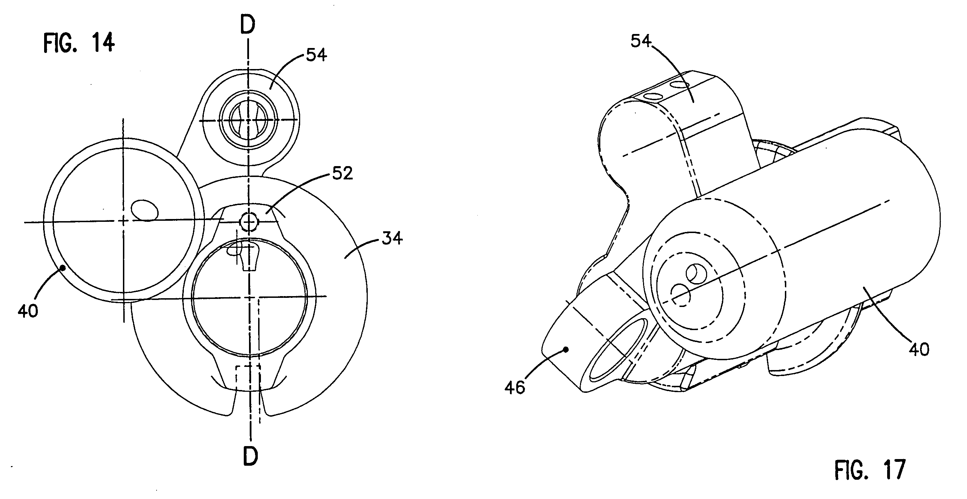

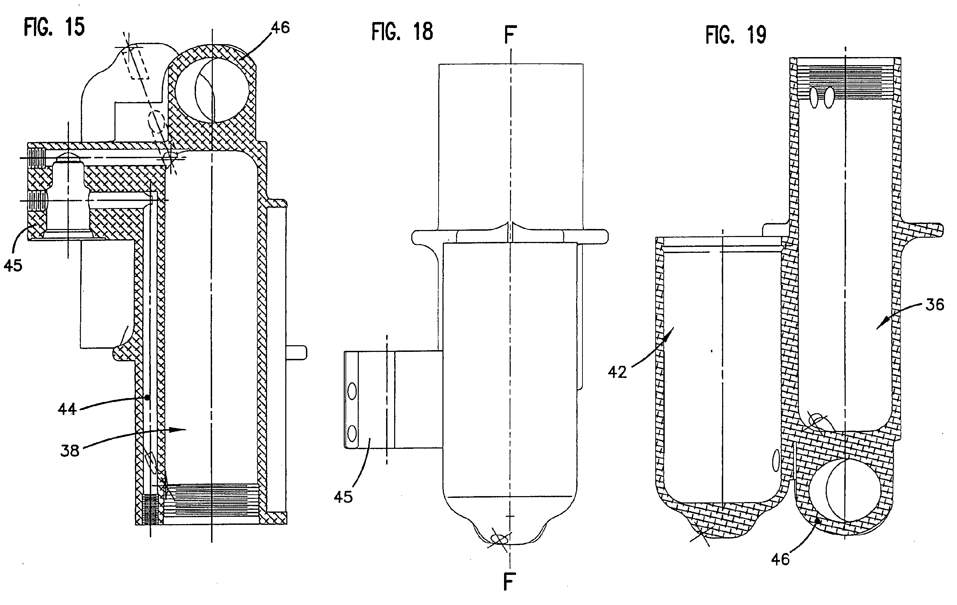

Figures 13-19 show various views of the body of shock absorber 22. In figure 15, channel 44 is shown. Channel 44 extends from an opening near housing end mount 46 through valve mount 45, along the wall of fluid reservoir 38, to another opening near reservoir cap 60. Channel 44 enables fluid to quickly pass from one side of piston assembly 64 to the other side of piston assembly 64 when valve 56 is in the open position. Valve mount 45 is disposed in channel 44 so that control valve 56 is capable of obstructing the fluid movement through channel 44 when the control valve 56 is in the closed position.

When the fluid movement through channel 44 is obstructed, the fluid may move through the compression and rebound valves, thereby providing some shock absorption. The diameter of the compression and rebound valves is generally much smaller than the diameter of the channel 44. Accordingly, the shock absorber 22 is much stiffer when the control valve 56 is in the closed position. When the control valve 56 is in the open position, fluid is permitted to move through the compression valves in addition to the channel 44. This provides for much less damping than when the control valve 56 is in the closed position.

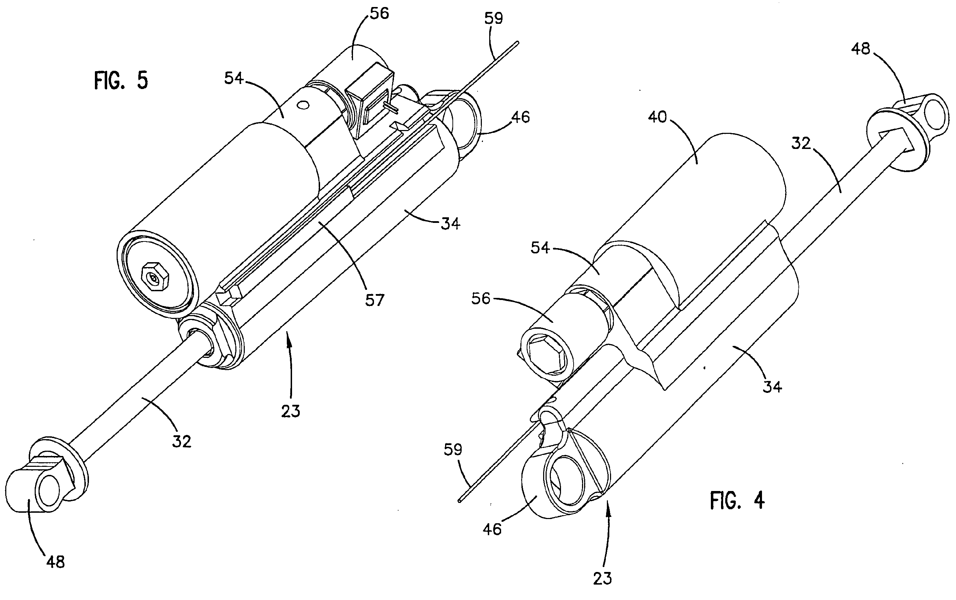

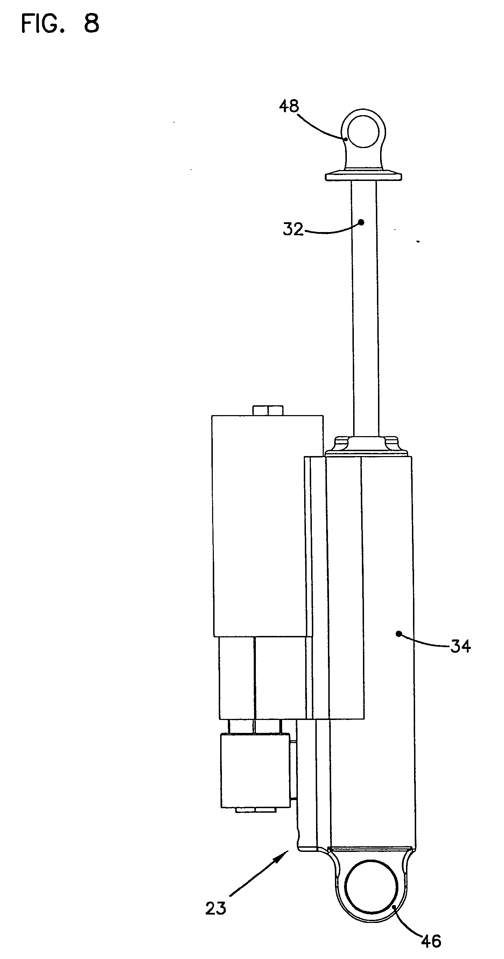

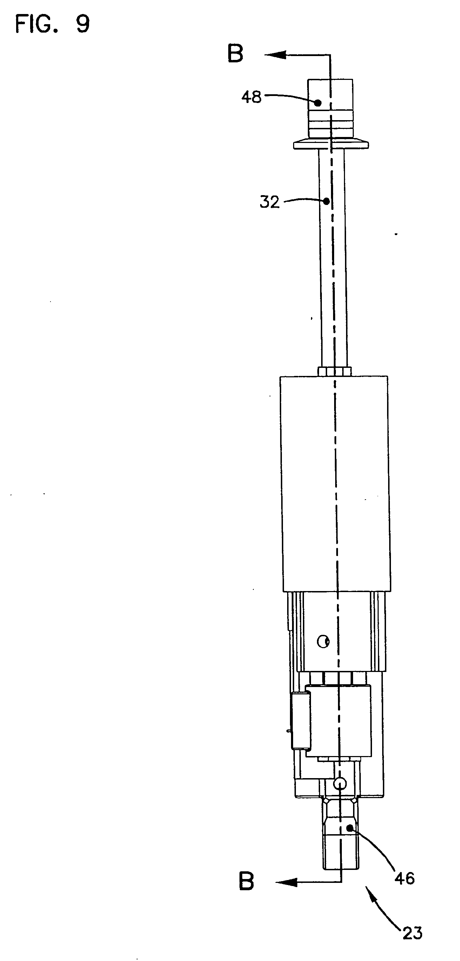

Referring now to FIGS. 4, 5, 8, 9 and 10 the details of alternative shock absorber 23 will now be discussed. Note that while shock absorber 23 refers to the shock absorber used with the rear suspension of the snowmobile illustrated in FIG. 1, the same or similar shock absorber can be utilized on either the front or rear suspension of snowmobiles or ATV's.

Shock absorber 23 is similar to shock absorber 22 in function and purpose. However, shock absorber 23 varies from shock absorber 22 with respect to the placement of the remote reservoir 40 relative to the valve housing 54. For example, in FIG. 4, the valve housing 54, and the control valve 56 are located in the same axis as the remote reservoir 40. Alternatively, FIGS 1 and 2 show that the valve housing 54 and the control valve 56 are each located alongside the reservoir 40.

Shock absorber 23 includes a rod 32 extending into a main body 34. A spring may extend along rod 32 and over a portion of the main body 34. Spring 36 absorbs shock and provides rebound while rod 32 extends into main body 34 and provides damping as explained above.

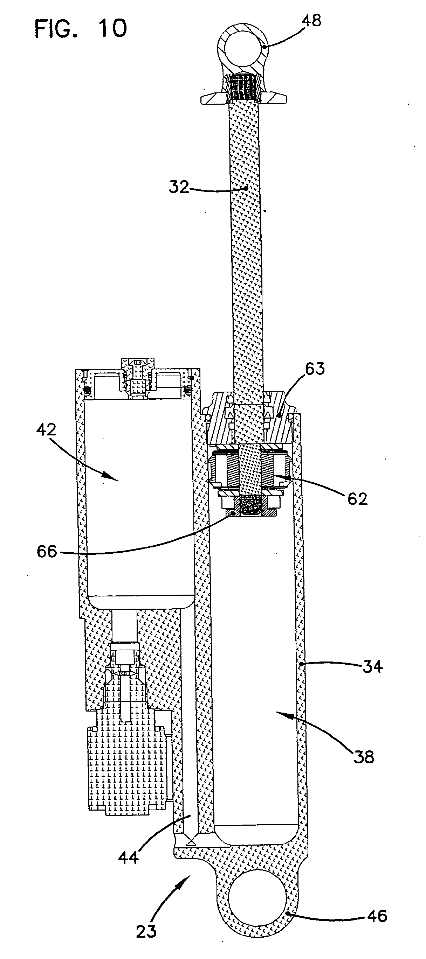

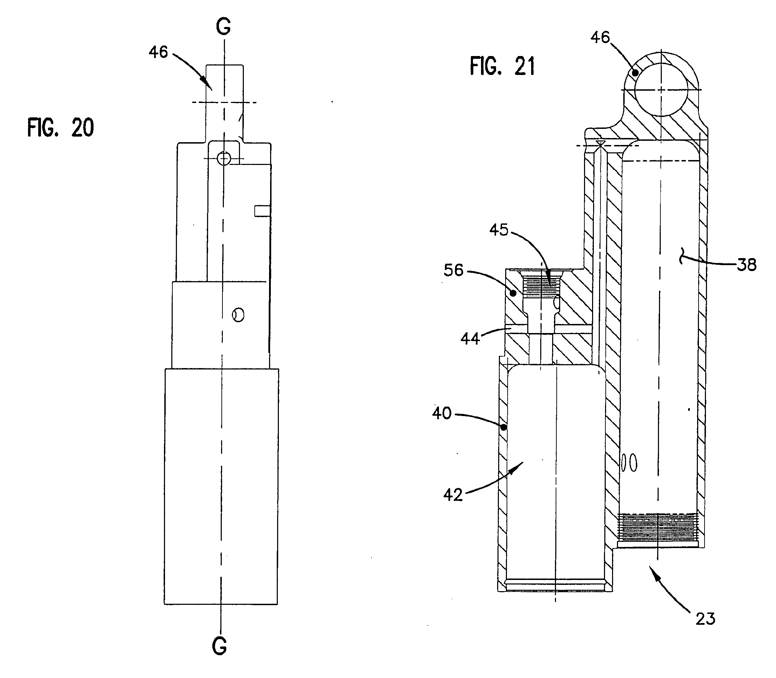

Main body 34 encloses fluid reservoir 38. Remote reservoir 40 may be contained in the same general casting as main body 34 but it is located outside fluid reservoir 38. Remote reservoir 40 contains fluid chamber 42, shown in FIGs. 10 and 21. Fluid chamber 42 and remote reservoir 40 are interconnected by channel 44, shown in FIG. 10. Alternatively, fluid may move from the fluid reservoir 38 to the fluid chamber 42 through hoses connected to fittings in the housing.

The end of the main body 34 opposite the rod 32 contains a housing end mount 46 for mounting the end of the shock absorber 23 either to the snowmobile chassis 15 or the suspension 18 or 16. A rod end mount 48 is provided on the opposite side of the shock absorber 23.

A valve housing 54 is also provided on shock absorber 23. Valve housing 54 can be axially aligned with remote reservoir 40 and may be contained in the same general casting as main body 34. Valve housing 54 holds the control valve 56. The control valve 56 preferably comprises a solenoid capable of actuating from the open to closed position.

Microprocessor/GMR sensor controller unit 57 is located on the side of shock absorber 23, generally between main body 34 and remote reservoir 40. Microprocessor/GMR sensor controller unit contains the GMR sensor, which is capable of sensing the velocity and position of magnet 66 that is fastened to the end of rod 32. The GMR sensor sends a signal to the microprocessor, which processes the information from the GMR sensor and actuates the control valve 56. Power wire 59 provides electric current to the components in the microprocessor/GMR sensor controller unit 57.

Fluid reservoir 38 includes an opening at one end through which rod 32 is inserted. A reservoir cap 63 may extend around the rod 32 and be held tightly within the open end of the main body 34 to create an enclosed fluid reservoir 38. O-rings may generally be employed at appropriate locations to ensure adequate sealing.

A GMR sensor is provided to detect both the displacement and velocity of rod 32 and the piston assembly 64 relative to the main body 34. The sensor and control arrangement preferably employed in the present invention includes a magnet 66 secured on the end of the piston assembly 64, as shown in FIG. 10. A sensor may be secured in the sensor controller unit 57. The sensor is preferably connected to circuit board comprised of a microprocessor chip that includes the microprocessor logic to manipulate the control valve 56 based on the signal from the sensor. As the rod 32 moves in response to changing terrain, the magnet 66 moves past the GMR sensor located in the control unit 57. The GMR sensor detects the velocity and position of the magnet 66, which corresponds to the velocity and position of the rod 32. The microprocessor interprets the information from the sensor, which manipulates the control valve 56.

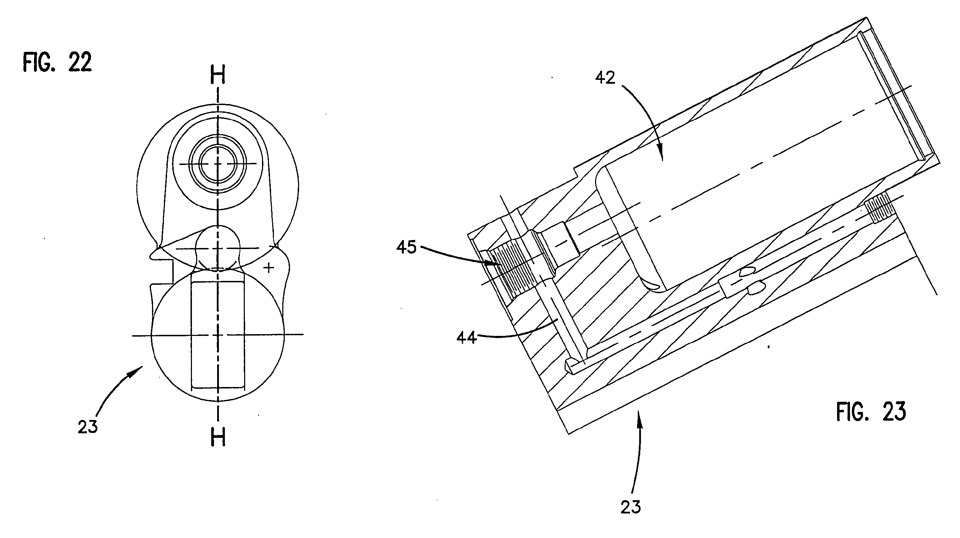

Figures 21-23 show various views of the body of shock absorber 23. In figure 21, valve mount 45 is shown. Valve mount 45 is disposed in channel 44 so that control valve 56 is capable of obstructing the fluid movement through channel 44 when the control valve 56 is in the closed position.

As shown in FIG's. 7 and 10, piston assembly 62 contains compression and rebound valves 60. When the fluid movement through channel 44 is obstructed, the fluid may move through the compression and rebound valves, thereby providing some shock absorption. The diameter of the compression and rebound valves is generally much smaller than the diameter of the channel 44. Accordingly, the shock absorber 23 is much stiffer when the control valve 56 is in the closed position. When the control valve 56 is in the open position, fluid is permitted to move through the compression valves in addition to the channel 44. This provides for much less damping than when the control valve 56 is in the closed position.

## Claims

1. A suspension control system for use with a snowmobile, ATV or motorcycle, said suspension control system comprising:
a main body defining a fluid reservoir and containing a fluid;
a piston disposed within the fluid reservoir, the piston being configured for movement under the force of a shock acting on the piston, the piston having first and second sides and being movable between a first piston position and a second piston position;
a remote reservoir defining a fluid chamber, wherein the fluid chamber is coupled to the fluid reservoir, the fluid chamber having a channel with an outlet port, a first inlet port and a second inlet port extending through a wall of the fluid chamber and in fluid communication with the main body fluid reservoir so that fluid may flow from the fluid reservoir to the fluid chamber;
a control valve operable to control the flow of the fluid from the main body fluid reservoir to the remote reservoir fluid chamber, the valve being movable from an open position, where fluid movement from the fluid reservoir through the channel to the fluid chamber is permitted, to a closed position wherein the flow of fluid through the channel is blocked, and;
a GMR sensor operable to sense at least one of the displacement of the piston and the velocity of the piston and send a signal to a microprocessor for controlling the position of the control valve.

2. The suspension control system of claim 1, wherein the control valve is located in the same axis as the remote reservoir.

3. The suspension control system of claim 1, wherein the control valve is located alongside the remote reservoir.

4. The suspension control system of claim 1, wherein the control valve is movable from an open position to a closed position in response to at least one of the extent of displacement of the piston and the velocity of displacement of the piston.

5. The suspension control system of claim 1, wherein the, control valve is at least partially disposed within the channel.

6. The suspension control system of claim 1, wherein the control valve comprises 2-way valve designed to function as a bi-directional blocking valve.

7. The suspension control system of claim 6, wherein the control valve is biased toward the closed position.

8. The suspension control system of claim 6, wherein the control valve is biased toward the open position.

9. The suspension control system of claim 1, further comprising a valve housing, wherein the valve housing, remote reservoir, and main body are formed as a unitary casting.

10. The suspension control system of claim 1, wherein the GMR sensor is in communication with the microprocessor and control valve.

11. The suspension control system of claim 10, further comprising a power source.

12. The suspension control system of claim 1, further comprising a rod having an enclosed portion located within the main body and an exposed portion located outside the main body.

13. The suspension control system of claim 12, further comprising a spring disposed about the exposed portion of the rod.

14. The suspension control system of claim 10, further comprising a circuit board, wherein the circuit board is electronically connected to the GMR sensor, wherein the circuit board controls the control valve's open and closed position.

15. The suspension control system of claim 1, wherein the fluid comprises hydraulic fluid.

16. A method of dampening a shock absorber, comprising:
moving a piston through a fluid in a fluid reservoir of a dampener, the piston moving from a first position to a second position,
moving a portion of the fluid into a fluid chamber through a channel, the channel being coupled to the fluid reservoir and a first chamber, the channel having an inlet port coupled to the fluid reservoir and an outlet port coupled to the first chamber,
using a GMR sensor to detect the movement of the piston to the second position as the fluid moves through the channel;
using a control valve to restrict the flow of fluid through the inlet port to the outlet port in response to at least one of a piston displacement or velocity of piston displacement.

17. The method of claim 16, wherein the control valve is controlled by a microprocessor that receives a signal from the GMR sensor.

18. A dampener for a shock absorber, comprising;
a main body defining a fluid reservoir containing fluid;
a piston disposed within the fluid reservoir for movement under the force of a shock acting on the piston,
a remote reservoir defining a first chamber;
a channel coupled to the fluid reservoir and the first chamber, the channel permitting fluid to flow from the fluid reservoir through the channel to the first chamber;
a valve housing containing a control valve to control the movement of fluid through the bypass channel, the valve housing, remote reservoir and main body being formed as a unitary casting.
a bypass channel connecting the top of the first chamber with the bottom of the first chamber on opposite sides of the piston, wherein the bypass channel is capable of being opened and closed by the control valve;
a microprocessor in communication with a GMR sensor to control the position of the control valve.

19. The dampener of claim 18, further comprising a power source to provide power to the control valve.

20. The dampener of claim 18 wherein the valve is movable from an open position to a closed position in response to at least one of the extent of displacement of the piston and the velocity of displacement of the piston.

21. The dampener of claim 20, wherein the valve is a solenoid-operated, bi-directional blocking valve biased in the open position.

22. The dampener of claim 20, wherein the valve is a solenoid-operated, bi-directional blocking valve biased in the closed position.

23. A snowmobile comprising the suspension control system of claim 1.

24. An ATV comprising the suspension control system of claim 1.

25. A motorcycle comprising the suspension control system of claim 1.

26. A motorscooter comprising the suspension control system of claim 1.
